# EUROPÄISCHE PATENTSCHRIFT

(11) **EP 0 624 856 B1**
(45) Veröffentlichungstag und Bekanntmachung des Hinweises auf die Patenterteilung: **24.06.1998**
(21) Anmeldenummer: 94106868.6
(22) Anmeldetag: 03.05.1994
(51) Int. Cl.: G07C 7/00

(54) **Fahrtschreiber für Kraftfahrzeuge**
Tachograph for motor vehicle
Tachygraphe pour véhicule automobile

(30) Priorität: 12.05.1993 DE 4315833
(43) Veröffentlichungstag der Anmeldung: 17.11.1994
(73) Patentinhaber: Mannesmann VDO AG, 60326 Frankfurt (DE)
(72) Erfinder: Bartholomäi, Gunther, D-78052 Villingen-Schwenningen (DE)

(56) Entgegenhaltungen:
- EP-A- 0 012 223
- EP-A- 0 016 994
- EP-A- 0 191 413
- EP-A- 0 309 854
- EP-A- 0 313 882

## Beschreibung

Die Erfindung betrifft einen Fahrtschreiber für Kraftfahrzeuge mit einem Mikroprozessor zur Ermittlung von Fahrtdaten wie Strecke und Geschwindigkeit aus Gebersignalen sowie zur Lieferung von Arbeitszeitdaten wie Lenkzeit oder Ruhezeit etc., mit Schächten für den Fahrern zugeordneten und in den Fahrtschreiber einführbaren Datenkarten und mit einer Vorrichtung zur sichtbaren Darstellung ermittelter Daten auf einem Aufzeichnungsträger.

Die in Fahrtschreibern üblicherweise verwendeten Diagrammscheiben haben den Vorzug, einen relativ leicht handhabbaren dezentralen Datenspeicher darzustellen, dessen Inhalt sowohl als Sofortinformation unmittelbar, d.h. ohne technische Hilfsmittel verwenden zu müssen, lesbar ist. Auf diese Weise sind bei stichprobenweisen Kontrollen die Fahrtdaten eines Transportauftrages, einer Schicht oder eines Arbeitstages sowie das Einhalten der Arbeitszeitrichtlinien der sogenannten Sozialvorschriften sozusagen auf einen Blick überschaubar.

EP-A-0.309.854 zeigt einen solchen Fahrtschreiber.

Der Nachteil des Datenträgers "Diagrammscheibe" ist insbesondere darin zu sehen, daß der Registrierzeit- und somit Speicherhorizont aus praktischen Gründen auf 24 Stunden pro Diagrammscheibenumdrehung festgelegt ist, womit, bezüglich der Geschwindigkeitsaufzeichnungen und somit der anhand der Diagrammscheiben vornehmbaren Unfallanalysen, eine noch tolerierbare Auflösbarkeit, bezüglich der Arbeits- und Ruhezeiterfassung, aber ein zu enger Zeitrahmen gegeben ist.

Mit der EP 0191413 B1 ist ein Fahrtdatenerfassungssystem vorgeschlagen worden, bei dem mit Halbleiterspeichern versehene, fahrerbezogene Datenkarten, insbesondere zur Erfassung der Arbeits- und Ruhezeiten Anwendung finden und Vorkehrungen getroffen sind, die es ermöglichen, bei Bedarf ein sogenanntes Fahrtprotokoll auszudrucken. Ein solches System bietet zwar den Vorzug einer fahrerbezogenen Langzeitspeicherung der Arbeitszeitdaten und die Möglichkeit der räumlichen Trennung bzw. Trennbarkeit von Arbeitszeitdaten und reinen Fahrzeugmeßwerten, es erfordert aber eine Abkehr von den allgemein verbreiteten und tief eingeprägten Handhabungen, die beim bisherigen Fahrtschreiberbetrieb erforderlich sind, und macht das für die Auswertung der Diagrammscheibenaufzeichnungen inzwischen geläufige Interpretationswissen überflüssig. Dabei wird, insbesondere was die Aufzeichnungen der gefahrenen Geschwindigkeiten angelangt, eine wesentlich weniger gute Eignung für stichprobenweise Kontrollen und den raschen Überblick bezüglich der Fahrweise in Kauf genommen. Außerdem ist für das selbsttätige Einziehen und Ausgeben des vorgesehenen Datenträgers, die hierfür erforderliche Funktionskontrolle sowie das Drucken ein hoher technischer Aufwand erforderlich, um die bestimmungsgemäße Funktion, jederzeit einen archivierfähigen Datenausdruck erstellen zu können, zu garantieren. Das heißt, daß mit Sicherheit vermieden werden muß, daß ein Datenträger beim Transport hängenbleibt oder unvollständig bedruckt wird. Selbstverständlich macht ein Fahrtdatenerfassungssystem gemäß der EP 0191413 Mittel erforderlich, mit welchen die Datenkarten, um Manipulationen zu erschweren, verriegelbar sind, andererseits aber auch Mittel, um eine Verschmutzung der Kartenschächte und damit Kontaktschwierigkeiten zu vermeiden. Derartige Maßnahmen sind jedoch in der EP 0191413 B1 nicht dargestellt.

Die Aufgabe der vorliegenden Erfindung bestand somit darin, einen für die Verwendung von fahrerbezogenen Datenspeichern in Form von Datenkarten gemäß der EP 0191413 B1 ausgebildeten Fahrtschreiber dahingehend zu verbessern, daß er bei hoher Funktionssicherheit mit geringem Aufwand herstellbar ist und die Datenkarten auf einfache Weise zugriffs- und verschmutzungssicher verriegelbar sind.

Die Lösung der Aufgabe sieht vor, daß bei einem Fahrtschreiber nach dem Oberbegriff des Anspruchs 1 als Aufzeichnungsträger Diagrammscheiben vorgesehen sind, daß von einem Laufwerk uhrzeitrichtig angetriebene Zentrier- und Mitnahmemittel für die Diagrammscheiben einem relativ zum Gehäuse des Fahrtschreibers bewegbaren Träger zugeordnet sind, daß der Träger mit dem Gehäuse des Fahrtschreibers verriegelbar ist und daß die Schächte zur Aufnahme der Datenkarten derart ausgebildet sind, daß Sie durch das Verriegeln des Trägers mit dem Gehäuse unzugänglich verschließbar sind.

Ein bevorzugtes Ausführungsbeispiel ist dadurch gekennzeichnet, daß der Träger als eine in dem Gehäuse des Fahrtschreibers verschiebbar gelagerte Schublade ausgebildet ist.

Die Erfindung bietet den Vorteil, daß infolge der Verwendung von Diagrammscheiben als Aufzeichnungsträger weder beim Handhaben noch beim Auswerten eine Umgewöhnung gegenüber der bisher üblichen Praxis bei der Erfassung von Fahrtdaten mittels Fahrtschreibern erforderlich ist. Die Vorzüge der Diagrammscheiben, also Sofortinformation, Überprüfbarkeit der Fahrweise und die Möglichkeit der Unfallauswertung bleiben erhalten, die Nachteile bezüglich der Arbeitszeitregistrierdauer werden durch die Verwendung der Datenkarten kompensiert. Von Vorteil ist ferner die gemeinsame zugriffssichere Verriegelung und staubdichte Anordnung von Diagrammscheiben und Datenkarten.

Durch die Verwendung von Diagrammscheiben und Datenkarten in ein und demselben Gerät ist außerdem eine gegenseitige Ergänzung dadurch gegeben, daß bei einer Schlüsselfunktion der Datenkarten für den Betrieb des Fahrzeuges der Fahrtschreiber ohnehin geöffnet werden muß und ein Einlegen der Diagrammscheiben dann nur noch in betrügerischer Absicht unterbleiben kann. Ebenso ist am Ende eines Arbeitstages, einer Schicht, eines Auftrages bei Verwendung von Diagrammscheiben das erforderliche Fahrtprotokoll bereits erstellt. Es kann somit nicht vorkommen, daß ein Ausdrucken vergessen wird.

Ein weiterer Vorzug ist darin zu sehen, daß die vorgeschlagene Kombination von Diagrammscheiben und Datenkarten in besonderer Weise geeignet ist, Manipulationen nachweisen zu können. Das heißt, die Aufzeichnungen auf den Diagrammscheiben dienen der Plausibilitätsprüfung, insbesondere in bezug auf die auf den Datenkarten gespeicherten Daten. Diese Plausibilitätsprüfung ist deshalb in hohem Maße zuverlässig, weil für die beiden Datenträger Diagrammscheiben und Datenkarten völlig voneinander verschiedene Registrierverfahren angewandt werden. Hinzu kommt, daß beim Öffnen der Schublade nicht nur eine Markierung auf den Diagrammscheiben aufgezeichnet, sondern gleichzeitig auch die Kontaktunterbrechung auf den Datenkarten registriert wird.

Erwähnenswert ist ferner, daß bei der vorgeschlagenen Kombination getrennte Ver- und Entriegelungsmittel für die Datenkarten ggf. den Datenkarten zugeordnete Schlitten, die die jeweilige Datenkartenaufnahme zu einem relativ aufwendigen Aufnahmeaggregat werden lassen, nicht erforderlich sind, mit anderen Worten, diese Funktionen von der Schublade übernommen werden.

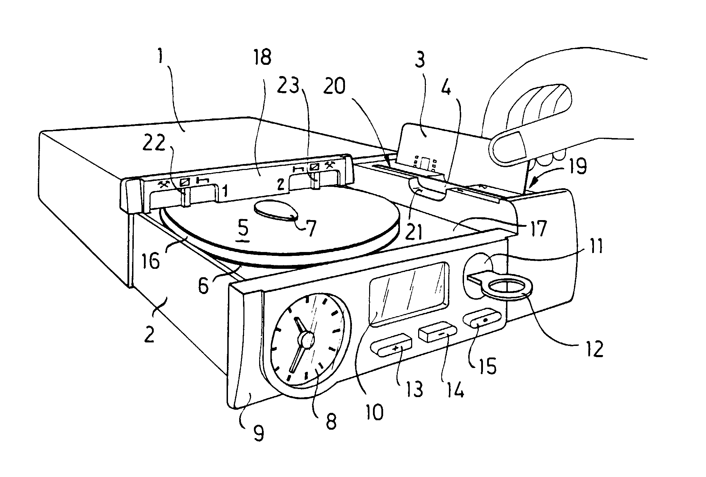

Im folgenden sei der erfindungsgemäße Fahrtschreiber anhand der beigefügten Zeichnung näher erläutert.

Die Zeichnung zeigt ein Gehäuse 1 mit Abmessungen, welche einen Einbau des Fahrtschreibers in ein für ein Autoradio vorgesehenes Fach bzw. ein zusätzliches in ähnlicher Weise gestaltetes Fach ermöglichen. Mit 2 ist ein als Schublade ausgebildeter und in dem Gehäuse 1 geführter Träger bezeichnet, in welchem diverse Funktionsgruppen des Fahrtschreibers angeordnet sind, welcher insbesondere aber der Halterung von Datenkarten 3, 4 von Fahrer und Beifahrer sowie der Lagerung der Zentrier- und Mitnahmemittel der Fahrer und Beifahrer zugeordneten Diagrammscheiben 5, 6 dient. Von den Zentrier- und Mitnahmemitteln ist lediglich ein Zentrierdorn 7 sichtbar, der in üblicher Weise unrund ausgebildet ist. Ein den Zentrierdorn 7 uhrzeitrichtig antreibendes Laufwerk ist vorzugsweise in der Schublade 2 angeordnet und dient, wie bei Fahrtschreibern üblich, zusätzlich dem Antrieb der Zeiger einer Uhr 8. Selbstverständlich ist es auch möglich, den Antrieb des Laufwerks ortsfest im Gehäuse 1 anzuordnen und die Zentrier- und Mitnahmemittel über eine getriebliche Verbindung mit Teleskop-Funktion anzutreiben.

Der Frontwand 9 der Schublade 2 ist ein Zeilendisplay 10 und ein Schloß 11 zugeordnet. Letzteres dient der Verriegelung der Schublade 2 mit dem Gehäuse 1, wobei vorzugsweise der zur Betätigung des Schließzylinders vorgesehene Schlüssel 12 als Griff für die Betätigung der Schublade 2 ausgebildet ist. Von den Tasten 13, 14 und 15 dient die Taste 15 als Wähltaste mittels der verschiedenen Betriebszustände des Fahrzeuges sowie Lenkzeiten, Bereitschaftszeiten und Ruhezeiten der Fahrer zur Anzeige auf dem Zeilendisplay 10 anwählbar sind. Die Tasten 13 und 14 dienen beispielsweise dem Stellen des Uhrwerks oder, wenn die Lenkzeit des Fahrers 1 angewählt ist, der Anzeige, wie lange der Fahrer 1 bereits gefahren ist oder wie lange er bis zur nächst fälligen Lenkzeitunterbrechung noch fahren kann.

Wie aus der Zeichnung ferner ersichtlich ist, ist den Diagrammscheiben 5 und 6 eine Distanzscheibe 16 zugeordnet, die der obenliegenden Diagrammscheibe 5 als Registrierunterlage dient und in der, was nicht sichtbar ist aber auch nicht erfindungswesentlich, ein Registrierorgan für die Aufzeichnung der Arbeitszeiten des Beifahrers bzw. des Fahrers 2 auf der untenliegenden Diagrammscheibe 6 gelagert und in geeigneter Weise mit einem ihm zugeordneten Antrieb gekuppelt ist. Die Distanzscheibe 16 ist schwenkbar auf einem der untenliegenden Diagrammscheibe als Registrierunterlage dienenden Zwischenboden 17 der Schublade 2 gelagert. In der Zeichnung ist die Schublade 2 nicht vollständig herausgezogen dargestellt, so daß die Lagerung der Distanzscheibe 16 nicht sichtbar ist.

Insbesondere bei der vorgeschlagenen Kombination von Diagrammscheiben und Datenkarten bietet es sich, wenn gesetzliche Vorschriften dies zulassen, an, für Fahrer und Beifahrer nur eine Diagrammscheibe oder ein für einen Registrierzeitraum von 7 Tagen vorgesehenes Diagrammscheibenbündel zu verwenden. Dadurch kann der durch die Parallelregistrierung auf einer zweiten Diagrammscheibe erforderliche technische Aufwand vermieden werden.

Der Vollständigkeit halber sei noch erwähnt, daß die Registrierorgane für das Aufzeichnen der gefahrenen Geschwindigkeiten, der zurückgelegten Wege, der Arbeitszeiten wenigstens eines Fahrers und ggf. weiterer Meßwerte und Zustände in dem Gehäuse 1 des Fahrtschreibers und zwar verdeckt durch den frontseitigen Wandteil 18 angeordnet sind. Ebenso sind die den Datenkarten 3, 4, die in Schächten 19 und 20 lediglich gehaltert sind, zugeordneten Abtasteinrichtungen, beispielsweise Kontaktsätze, ortsfest im Gehäuse 1 angeordnet. Dadurch sind die Kontaktsätze weitgehend unzugänglich, und es besteht, insbesondere, wenn den Datenkarten für das Inbetriebsetzen des Fahrzeuges eine Schlüsselfunktion zugeordnet ist, die absolute Notwendigkeit, die Schublade 2 des Fahrtschreibers zu schließen.

Die Schächte 19 und 20, denen in geeigneter Weise Griffmulden - eine ist mit 21 bezeichnet - zugeordnet sind, können zur Ebene der Diagrammscheiben geneigt ausgebildet sein. Dadurch läßt sich, falls erforderlich, die Bauhöhe verringern, entscheidend ist aber, daß eine derartige Gestaltung ein ergonomisch günstiges Zuführen und Entnehmen der Datenkarten 3, 4 gestattet. Mit 22 und 23 sind Schiebeschalter bezeichnet, mittels denen die Fahrer einer Fahrzeugbesatzung ihre jeweilige Tätigkeit, nämlich Lenken, Pause oder Bereitschaft, einstellen können. Mittels einer geeigneten Sperreinrichtung ist gewährleistet, daß jeweils nur ein Fahrer die Lenkstellung wählen kann.

## Patentansprüche

1. Fahrtschreiber für Kraftfahrzeuge mit einem Mikroprozessor zur Ermittlung von Fahrtdaten wie Strecke und Geschwindigkeit aus Gebersignalen sowie zur Lieferung von Arbeitszeitdaten wie Lenkzeit oder Ruhezeit etc. mit Schächten (19, 20) für den Fahrern zugeordneten und in den Fahrtschreiber einführbaren Datenkarten mit Halbleiterspeichern (3,4) und mit einer Vorrichtung zur sichtbaren Darstellung ermittelter Daten auf einem Aufzeichnungsträger (5, 6),
dadurch gekennzeichnet,
daß als Aufzeichnungsträger Diagrammscheiben (5, 6) vorgesehen sind,
daß von einem Laufwerk uhrzeitrichtig angetriebene Zentrier- und Mitnahmemittel (7) für die Diagrammscheiben (5, 6) einem relativ zum Gehäuse (1) des Fahrtschreibers bewegbaren Träger zugeordnet sind,
daß der Träger mit dem Gehäuse (1) des Fahrtschreibers verriegelbar ist und
daß die Schächte (19, 20) zur Aufnahme der Datenkarten (3, 4) derart ausgebildet sind, daß sie durch das Verriegeln des Trägers mit dem Gehäuse (1) unzugänglich verschließbar sind.

2. Fahrtschreiber für Kraftfahrzeuge nach Anspruch 1,
dadurch gekennzeichnet,
daß der Träger als eine in dem Gehäuse (1) des Fahrtschreibers verschiebbar gelagerte Schublade (2) ausgebildet ist.

3. Fahrtschreiber für Kraftfahrzeuge nach Anspruch 2,
dadurch gekennzeichnet,
daß die Diagrammscheiben (5, 6) bzw. deren Registrierunterlagen (16, 17) und die Schächte (19, 20) für die Aufnahme der Datenkarten (3, 4) nebeneinander in im wesentlichen rechtwinkelig zueinander stehenden Ebenen angeordnet sind.

4. Fahrtschreiber für Kraftfahrzeuge nach Anspruch 2,
dadurch gekennzeichnet,
daß die Diagrammscheiben (5, 6) und die Schächte (19, 20) in zueinander geneigten Ebenen angeordnet sind.

5. Fahrtschreiber für Kraftfahrzeuge nach Anspruch 1,
dadurch gekennzeichnet,
daß die den Datenkarten (3, 4) zugeordneten Abtasteinrichtungen ortsfest im Gehäuse (1) des Fahrtschreibers angeordnet sind.

6. Fahrtschreiber für Kraftfahrzeuge nach Anspruch 2,
dadurch gekennzeichnet,
daß die Frontwand des Fahrtschreibers von einem gehäusefesten Wandteil (18) und einem der Schublade (2) zugeordneten Wandteil (9) gebildet ist und
daß in dem Wandteil (9) der Schublade (2) wenigstens ein Schloß (11) angeordnet ist.

## Claims

1. Tachograph for motor vehicles having a microprocessor for determining driving data such as distance travelled and speed from sensor signals and also for supplying working-time data such as driving time or rest time etc., having slots (19, 20) for data cards with semiconductor memories (3, 4), which are allocated to the drivers and can be inserted into the tachograph, and having a device for the visual display of determined data on a recording medium (5, 6), characterized
in that tachograph discs (5, 6) are provided as the recording medium,
in that centring and driving means (7), which are driven with the correct time by a clockwork, for the tachograph discs (5, 6) are associated with a carrier movable relative to the housing (1) of the tachograph,
in that the carrier can be locked to the housing (1) of the tachograph, and
in that the slots (19, 20) for receiving the data cards (3, 4) are designed such that they can be closed so as to be inaccessible, by the locking of the carrier to the housing (1).

2. Tachograph for motor vehicles according to Claim 1,
characterized
in that the carrier is designed as a drawer (2) mounted slidably in the housing (1) of the tachograph.

3. Tachograph for motor vehicles according to Claim 2,
characterized
in that the tachograph discs (5, 6), and their recording bases (16, 17), and the slots (19, 20) for receiving the data cards (3, 4) are arranged one beside the other in planes situated substantially at right angles to one another.

4. Tachograph for motor vehicles according to Claim 2,
characterized
in that the tachograph discs (5, 6) and the slots (19, 20) are arranged in planes inclined with respect to one another.

5. Tachograph for motor vehicles according to Claim 1,
characterized
in that the scanning devices associated with the data cards (3, 4) are fixedly arranged in the housing (1) of the tachograph.

6. Tachograph for motor vehicles according to Claim 2,
characterized
in that the front wall of the tachograph is formed by a wall part (18) fixed to the housing and a wall part (9) associated with the drawer (2), and
in that at least one lock (11) is arranged in the wall part (9) of the drawer (2).

## Revendications

1. Enregistreur de route pour des véhicules automobiles avec un microprocesseur pour la détermination de données de parcours telles que distances parcourues et vitesses à partir de données de transmetteurs ainsi que pour la fourniture de données de temps de travail tels que temps de conduite ou temps de repos etc., avec des compartiments (19, 20) pour des cartes de données avec mémoires à semiconducteurs (3, 4) associées aux conducteurs et pouvant être introduites dans l'enregistreur de route et avec un dispositif pour la visualisation de données acquises sur un support d'enregistrement (5, 6),
caractérisé par le fait
que comme support d'enregistrement sont prévus des disques de diagramme (5, 6),
que, pour lesdits disques de diagramme (5, 6), des moyens de centrage et d'entraînement (7) entraînés en fonction du temps réel par un mécanisme d'entraînement sont associés à un support mobile relativement au boîtier (1),
que ledit support est verrouillable avec le boîtier (1) de l'enregistreur de route et
que les compartiments (19, 20) pour le logement des cartes de données (3, 4) sont réalisés de telle sorte qu'ils peuvent être fermés pour devenir inaccessibles par le verrouillage du support avec le boîtier (1).

2. Enregistreur de route pour des véhicules automobiles selon la revendication 1,
caractérisé par le fait
que le support est réalisé sous forme de tiroir (2) monté mobile dans le boîtier (1) de l'enregistreur de route.

3. Enregistreur de route pour des véhicules automobiles selon la revendication 2,
caractérisé par le fait
que les disques de diagramme (5, 6) ou les tables porte-graphiques (16, 17) de ces derniers et les compartiments (19, 20) pour le logement des cartes de données (3, 4) sont disposés côte à côte dans des plans pour l'essentiel perpendiculaires l'un par rapport à l'autre.

4. Enregistreur de route pour des véhicules automobiles selon la revendication 2,
caractérisé par le fait
que les disques de diagramme (5, 6) et les compartiments (19, 20) sont disposés dans des plans inclinés l'un par rapport à l'autre.

5. Enregistreur de route pour des véhicules automobiles selon la revendication 1,
caractérisé par le fait
que les dispositifs d'exploration associés aux cartes de données (3, 4) sont disposés de manière stationnaire dans le boîtier (1) de l'enregistreur de route.

6. Enregistreur de route pour des véhicules automobiles selon la revendication 2,
caractérisé par le fait
que la paroi frontale de l'enregistreur de route est formée par un élément de paroi (18) stationnaire et un élément de paroi (9) associé au tiroir (2) et
que dans l'élément de paroi (9) du tiroir (2) est disposée au moins une serrure (11).
